# EUROPEAN PATENT SPECIFICATION

(11) **EP 0 874 543 B1**
(45) Date of publication and mention of the grant of the patent: **27.03.2002**
(21) Application number: 95939297.8
(22) Date of filing: 05.12.1995
(51) Int. Cl.: A01G 23/083

(54) **HARVESTING METHOD AND APPARATUS**
ERNTEVERFAHREN UND -VORRICHTUNG
PROCEDE ET EQUIPEMENT DE RECOLTE

(43) Date of publication of application: 04.11.1998
(73) Proprietor: Hallintokolmio Oy, 33270 Tampere (FI); Ahonen, Annti, 33270 Tampere (FI)
(72) Inventor: AHONEN, Antti, FIN-33270 Tampere (FI)
(74) Representative: Nieminen, Taisto Tapani
(86) International application number: FI9500665
(87) International publication number: WO9720457

(56) References cited:
- DE-A- 2 810 545
- FI-B- 73 570
- SE-B- 428 992
- US-A- 3 865 160
- US-A- 4 350 188

## Description

The invention relates to a harvesting method according to claim 1 and to an apparatus according to claim 5, by means of which even a tree of less value can be efficiently, harvested.

Previously known are processors attached to the head of a movable boom and developed for harvesting, comprising the necessary equipment for felling, mechanical delimbing, measuring and crosscutting. Such a boom fixed to a mobile vehicle and the processor in its head are most usually driven along a random route in the the wood and carry out harvesting in the wood lot to the stage of clear cutting, harvesting all trees that have any sales value. With above equipment harvesting can be done leaving also some stand of forest untouched. In order to operate the complete equipment requires so much space that it cannot be used for thinning of small and medium size trees. By a vehicle like this one has to get to within 7 meters of the tree to be felled and, in addition, there must be space for the felled tree and space for possible shifting it over toward the vehicle as well as processing space.

US patent 3,865,160 discloses a tree harvester system having a pair of secondary arms, one carrying a processing unit with tree shearing means and the other carrying a grasping, transfer and feed mechanism. By means of the latter mechanism tree is cutted and in the vertical direction lifted to the processing unit and further vertically fed into said unit for shearing. The system can be used only for making of wood chips, not for making timber products due to the vertically directed feeding and processing operations. The making of wood chips of small value by means of the described system will hardly be profitable when processing essentially small trees and transporting the produced wood chips long ways.

Upon harvesting by thinning the equipment must have a wide reach range, preferable so much that one must not turn off the vehicle path, and so much speed that harvesting of trees of small value would be profitable, and versatility, so that the tree to be thinned out could be processed already in the wood with regard to its use.

By means of the inventional solution above mentioned disadvantaged are avoided and a decisive improvement is achieved with reference to former methods and apparatus. The invention is characterized in what is presented in the claims.

The advantage of the method is utilization of the full capacity of apparatus and driving motor, because in the apparatus processing is switched on automatic function as soon as the tree butt arrives att the processing unit. At the same time the machine operator can steer the felling head to the next tree, fell it and bring it with the butt ahead to the processing unit, while the former tree is still being processed. The apparatus can be used by full capacity uninterruptedly. In most cases, the vehicle can be kept in the vechicle path, because in using the method the reach range is made rather wide. Likewise, by this method the harvested trees get to the side of the path already delimbed, possibly crosscut or even debarked, since tree processing takes place toward the vehicle path. From the same path the trees can be collected onto a trailer in using a loader. The distance between vehicle paths can be 25 metres or more. By the method also delimbed masses of branches, leaves and needles remain evenly in the terrain increasing the nutritive content of the forest.

In the following the invention is disclosed with reference to the enclosed drawing, where
Fig. 1 is a side view of the apparatus in working position.
Fig. 2 is a side view of the processing unit.

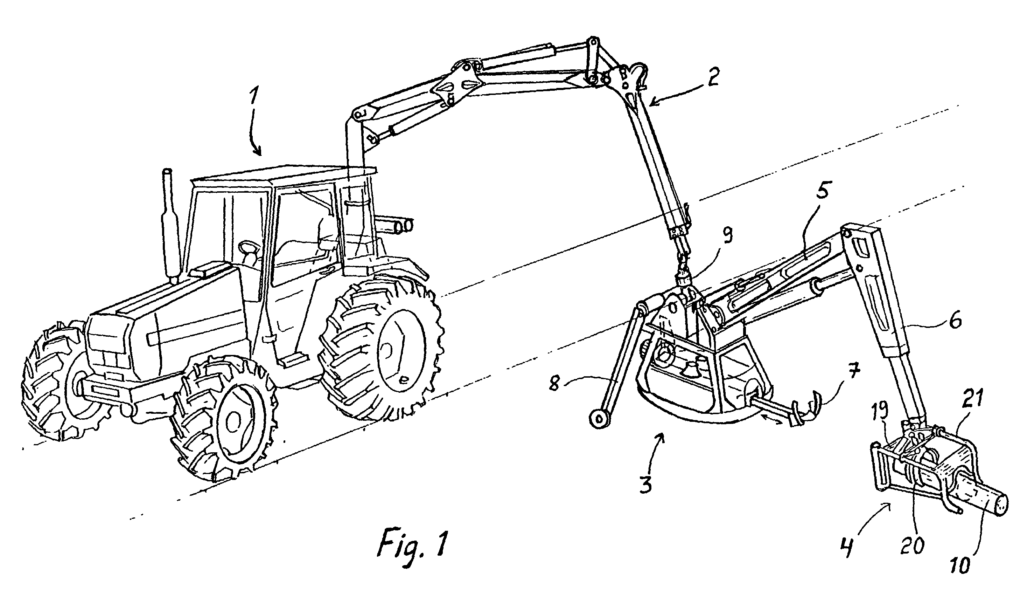

Figure 1 shows a pivoting boom 2 mounted in an agricultural tractor 1, where in the top of the boom the processing unit 3 is fixed suspended by a slewing gear 9. From processing unit 3 extends further boom arms 5,6 in the top of which a felling head 4 is fixed. The added mass of the processing unit 3 with boom 5,6 and felling head 4 is within the limits of boom 2 lifting capacity and thus this combined unit can be lifted by boom 2 to aimed spots among the threes which are to be thinned. Processing unit 3 has a base or adjustable outriggers 8 and is always let down to the ground for processing and felling head operation. The base may have supporting wheels or have the form of a sled for wintertime operation. By means of felling head 4 and extension arms 5,6 the trees 10 to be thinned out are picked up and their butt is placed into the feeding opening in the processing unit, where tree 10 is shifted further by rolls 17. The processing unit 3 includes automatic functions and need not be particularly controlled. Accordingly, the operator can at the same time steer extension arms 5,6 and select and pick up the next tree with felling head 4. Felling head 4 has a frame 21 including guides for felling the tree in the proper direction, grapple arms 20 for gripping the tree and a chain saw 19 for tree cut-off. The felling head is also well fitted for dragging tree 10 towards processing unit 3, since there is no need to dimension its boom to carry larger trees at least not at the extreme limits of its reach. The felling head function can be controlled also by a camera 13 which is arranged in the processing unit 3 and the operator has a monitor in the vehicle. A great distance between vehicle 3 and felling head 4 often distracts direct observation, whereby the use of camera is advantageous. Felling head 4 can also be furnished with a picking device, whereby it can pick several trees into grapple 20 in keeping the felling head vertical during picking and conveying several small trees at a time. Likewise, felling head 4 can be furnished with a separate sawing device to make room for bringing the felling head to the tree to be harvested, i.e. it clears out small trees out of the way.

The processing unit 3 contains prior known delimbing blades 7, which in this case are movable also lengthwise. Unit 3 also has adjustable outriggers 8 or supporting wheels, by means of which it can be stabilized into rough terrain or by means of which it can also be moved or turned. Arm 5 extending from the unit frame is articulated also to pivot horizontally upon unit 3 frame, whereby it can be directed to the next tree without turning unit 3 before accomplishment of the former tree processing.

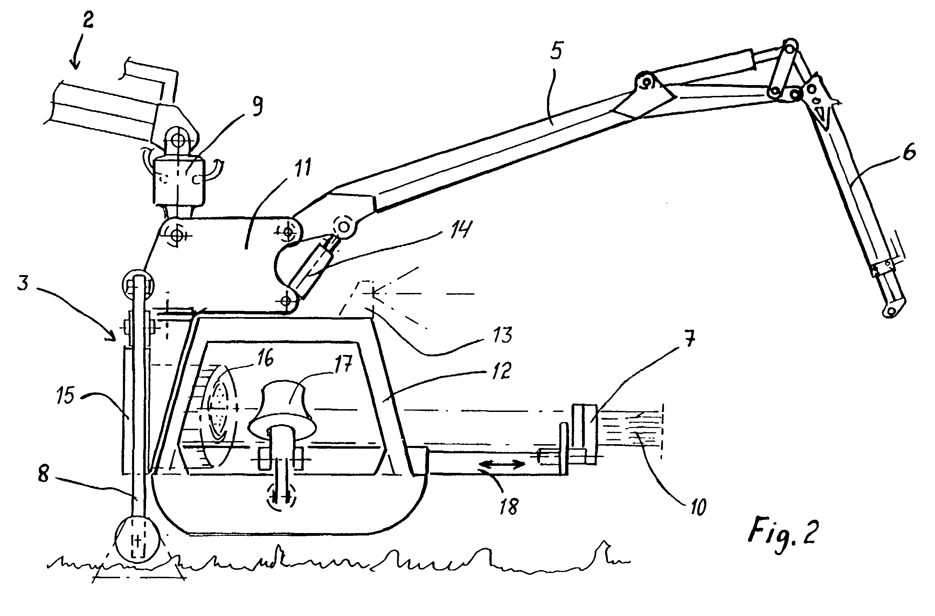

In figure 2 a processing unit 3 is shown in detail suspended in boom 2 by a slewing gear 9. The unit upper body 11 can be turned with respect to the lower body 12 and along with upper body 11 the extension arms 5, 6 moving felling head 4 are turned horizontally. The bottom section of body 12 can be advantageously placed on the ground and for possible sliding in the terrain. To body 12 outriggers 8, adjustable in height, or wheels are fixed, by means of which the unit stability can be increased, the unit direction or position corrected or the unit moved.

As processing devices in the unit there are delimbing blades, by means of which motion lengthwise is possible. There are rotatable rolls 17 in body 12 feeding the delimbed tree with the butt ahead through the debarking drum 16 and out from the unit. By this method tree delivery occurs advantageously along the vehicle path and in the reach of a conventional loader.

Further, there is in unit 3 a cut-off saw 15 for making the dimension timber of tree upon need. Tree length measuring is arranged in any prior way, e.g. by a disc rotating against the tree. In unit 3 or 11 a camera 13 is placed transmitting the image of the felling head 4 operation area to the vehicle.

An intermediate processing unit 3 placed between vehicle 1 and felling head 4 according to the invention, can be made into a unit that contains different tree processing means. In addition to the presented debarking device 16 and cut off device 15, well applicable as processing means are a chipping device, a carving device and a surface treatment device, by means which, for instance, some protective agent can be sprayed on the tree surface.

The invention is not restricted to the enclosed embodiment but several modifications are possible within the limits of the inventional concept determined by the patent claims.

## Claims

1. A harvesting method using a processing unit (3) which is fixed at the end of a vehicle (1) mounted first boom system (2) and which unit (3) is provided with tree processing devices (7,16,15), to which unit (3) is further fixed a second boom system (5,6) provided with a felling head (4) having devices for felling, gripping and shifting a tree, **characterized in that** in the method the processing unit (3) is placed on the ground wherein said unit (3) carries out the processing of the tree in the horizontal direction, said felling head (4) is feeding the tree to the processing unit (3) in the horizontal direction and said felling head (4) and said processing unit (3) are working independently of each other.

2. A method according to claim 1 **characterized in that** by means of said extension arms (5,6) and said felling head (4) the trees to be felled are picked up around the processing unit (3).

3. A method according to claim 1 or 2 **characterized in that** processing of a tree (10) is carried out automatically by the processing unit (3).

4. A method according to any of the above claims 1 - 3 **characterized in that** the felling head (4) operation is surveilled and controlled by camera monitoring from the vehicle (1).

5. An apparatus for harvesting trees comprising of a first boom system (2) mounted on a vehicle (1), a processing unit (3) fixed at the end of said boom system (2), said unit (3) being provided with tree processing devices (7,15,16) and to said unit (3) is further fixed a second boom system (5,6) provided with a felling head (4) having devices for felling, gripping and shifting a tree (10), **characterized in that** the processing unit (3) is capable of being placed on the ground for processing of a tree, said unit (3) having a horizontal tree processing direction and the felling head (4) and processing unit (3) are arranged to operate independently of each other.

6. An apparatus according to claim 5 **characterized in that** the processing unit (3) has a base or outriggers (8) for fitting it in working position in the terrain and that the direction of the arms (5,6) extending from the unit (3) can be turned horizontally with respect to the unit (3).

7. An apparatus according claims 5 or 6 **characterized in that** the processing unit (3) includes the program and equipment for tree processing automatically in the processing unit (3).

8. An apparatus according to any of the above claims 5 - 7 **characterized in that** the processing unit (3) is in its working position turnable in different directions by means of the outriggers (8) and/or slewing gear (9).

9. An apparatus according to any of the above claims 5 - 8 **characterized in that** the controls of the actuators of the felling head (4) and the extensions arms (5,6) locate in the vehicle (1).

10. An apparatus according to any of the above claims 5 - 9 **characterized in that** as tree processing means the processing unit (3) has one or several devices selected from the group of delimbing, debarking, carving, chipping and cut-off means.

## Patentansprüche

1. Eine Baumverarbeitungsmethode mit Processor (3), der im Kopf eines ersten Kransystems (2) eines Fahrzeugs (1) befestigt und mit Holzverarbeitungsgeräten (7,16,15) versehen ist, und wo zum erwähnten Processor (3) noch ein zweites Kransystem (5,6) einschliesslich einer Fällvorrichtung (4) angekoppelt ist, wobei die Fällvorrichtung Geräte zum Fällen, Greifen und Versetzen eines Baums hat, **gekennzeichnet dadurch, dass** in der Methode der Processor (3) zum Boden gesenkt wird, wo er die Verarbeitung des Baums in horizontaler Richtung ausführt, die Fällvorrichtung (4) den Baum zum Processor (3) in horizontaler Richtung zuführt, die Fällvorrichtung (4) und der erwähnte Processor(3) unabhängig von einandern arbeiten.

2. Eine Baumverarbeitungsmethode gemäss Anspruch 1 **gekennzeichnet dadurch, dass** mit Hilfe der erwähnten Verlängerungsarme (5,6) und der erwähnten Fällvorrichtung (4) die gefällten Bäume umher den processor (3) aufgehoben werden.

3. Eine Baumverarbeitungsmethode gemäss Anspruch 1 oder 2 **gekennzeichnet dadurch, dass** die Verarbeitung des Baums (10) automatisch mit Processor (3) geschieht.

4. Eine Baumverarbeitungsmethode gemäss einem der obigen Ansprüche 1 - 3 **gekennzeichnet dadurch, dass** die Funktion der Fällvorrichtung (4) von einer aus Fahrzeug (1) monitorende Kamera kontrolliert und gesteuert wird.

5. Ein Apparatus für Baumverarbeitung bestehend aus einem, in einem Fahrzeug (1) montierten ersten Kransystem (2), einem im Kopf des erwähnten Kransystems (2) angebrachten Processor (3), der mit Holzverarbeitungsgeräten (7,16,15) versehen ist, und einem zweiten zum erwähnten Processor (3) angekoppelten Kransystem (5,6), einschliesslich einer Fällvorrichtung (4),der mit Geräten zum Fällen, Greifen und Versetzen des Baums (10) versehen ist **gekennzeichnet dadurch, dass** der Processor (3) zum Erdboden für Verarbeitung eines Baums gesenkt werden kann, und der erwähnte Processor (3) eine horizontale Baumverbeitungsrichtung hat und die Fällvorrichtung (4) und Processor (3) zur unabhängigen Funktion von ein andern angeordnet worden sind.

6. Ein Apparatus gemäss Anspruch 5 **gekennzeichnet dadurch, dass** der Processor (3) einen Untersetzer oder Ausleger (8) zur Regulierung seiner Arbeitsstellung im Gelände hat, und dass die Richtung der Verlängerungen (5,6) vom Processor (3) im Verhältnis zum Processor (3) geschwenkt werden können.

7. Ein Apparatus gemäss Anspruch 5 oder 6 **gekennzeichnet dadurch, dass** der Processor (3) das Programm und die Geräte zur automatisch Baumverarbeitung einschliesst.

8. Ein Apparatus gemäss einem der obigen Ansprüche 5 - 8 **gekennzeichnet dadurch, dass** der Processor (3) in seiner Arbeitsstellung mit Hilfe der Ausleger (8) und/oder des Schwenkwerks (9) in verschiedene Richtungen geschwenkt werden kann.

9. Ein Apparatus gemäss einem der obigen Ansprüche 5 - 9 **gekennzeichnet dadurch, dass** die Bedienungsgeräte und Stellantriebe der Fällvorrichtung (4) und der Verlängerungen (5,6) im Fahrzeug (1) sind.

10. Ein Apparatus gemäss einem der obigen Ansprüche 5 - 9 **gekennzeichnet dadurch, dass** Processor (3) als Baumverarbeitungsmittel ein oder viele Geräte aus der Gruppe Entästen, Entrinden, Spanschneiden, Hacken und Einschneiden hat.

## Revendications

1. Une méthode d'abattage utilisant une unité de traitement (3) située au bout d'un premier système à flèche (2) monté sur un véhicule (1) et munie de mécanismes (7, 16, 15) pour le traitement du bois, ladite unité (2) comportant encore un deuxième système à flèche (5, 6) avec une tête d'abattage (4) munie de mécanismes pour l'abattage, la préhension et le défilement du tronc, **caractérisée en ce que**, selon la présente méthode, l'unité de traitement (3) est placée sur le sol pour qu'elle y effectue le traitement du tronc dans le sens horizontal, ladite tête d'abattage (4) poussant le tronc horizontalement dans l'unité de traitement (3) et ladite tête d'abattage (4) et ladite unité de traitement (3) travaillant indépendemment l'une de l'autre.

2. Une méthode selon la revendication 1, **caractérisée en ce que** lesdits bras d'extension (5, 6) et la tête d'abattage (4) servent à ramasser les troncs à abattre autour de l'unité de traitement.

3. Une méthode selon l'une des revendications 1 et 2, **caractérisée en ce que** le traitement d'un tronc (10) est effectué automatiquement par l'unité de traitement (3).

4. Une méthode selon l'une quelconque des revendications 1 à 3 ci-dessus, **caractérisée en ce que** le fonctionnement de la tête d'abattage (4) est surveillé et contrôlé à l'aide d'un caméra de surveillance depuis le véhicule (1).

5. Un appareil pour abattre des arbres, comprenant un premier système à flèche (2) monté sur un véhicule (1) ainsi qu'une unité de traitement (3) placée au bout dudit système (2) et munie de mécanismes (7, 15, 16) pour le traitement de bois, sur laquelle unité (3) est encore placé un deuxième système à flèche (5, 6) muni d'une tête d'abattage (4) comportant des mécanismes pour l'abattage, la préhension et le défilement du tronc (10), **caractérisé en ce que** l'unité de traitement (3) peut être placée sur le sol afin d'y traiter des troncs, ladite unité traitant les troncs dans le sens horizontal, la tête d'abattage (4) et ladite unité (3) étant aménagées de manière à fonctionner indépendemment l'une de l'autre.

6. Un appareil selon la revendication 5, **caractérisé en ce que** l'unité de traitement (3) comporte une base ou des stabilisateurs (8) pour sa mise en position de travail sur le terrain ainsi qu'en ce que le système à flèche (5, 6) partant de l'unité (3) peut être tourné horizontalement par rapport à l'unité (3).

7. Un appareil selon la revendication 5 ou 6, **caractérisé en ce que** l'unité de traitement (3) comporte un programme et un équipement pour le traitement automatique du bois dans cette unité même (3).

8. Un appareil selon l'une quelconque des revendications 5 à 7 ci-dessus, **caractérisé en ce qu'**en position de travail, l'unité de traitement (3) peut être tournée dans différents sens à l'aide des stabilisateurs (8) et/ou d'un mécanisme d'orientation (9).

9. Un appareil selon l'une quelconque des revendications 5 à 8 ci-dessus, **caractérisé en ce que** les commandes des actionneurs pour la tête d'abattage (4) et les bras d'extension (5, 6) sont situés dans le véhicule (1).

10. Un appareil selon l'une quelconque des revendications 5 à 9 ci-dessus, **caractérisé en ce que** pour les fins du traitement du bois, l'unité de traitement (3) est munie d'un ou de plusieurs moyens sélectionnés du groupe de moyens pour ébrancher, écorcer, mettre en copeaux, déchiqueter ou couper le bois.
